# EUROPÄISCHE PATENTANMELDUNG

(11) **EP 3 139 474 A1**
(43) Veröffentlichungstag der Anmeldung: **08.03.2017**
(21) Anmeldenummer: 15183466.0
(22) Anmeldetag: 02.09.2015
(51) Int. Cl.: H02K 3/52, H02K 1/14, H02K 9/22, H02K 15/12

(54) **ELEKTRISCHE MASCHINE UND VERFAHREN ZUM BETRIEB EINER SOLCHEN ELEKTRISCHEN MASCHINE SOWIE HERSTELLVERFAHREN**

(71) Anmelder: Siemens Aktiengesellschaft, 80333 München (DE)
(72) Erfinder: Müller, Jörg, 97720 Nüdlingen (DE); Reubelt, Stefanie, 97618 Rödelmaier (DE); Volkmuth, Benjamin, 97717 Sulzthal (DE); Wehner, Andreas, 97688 Bad Kissingen (DE)

(57) **Zusammenfassung**

Die Erfindung betrifft eine elektrische Maschine (1) umfassend einen Rotor (6) und einen Stator (2) mit einer horizontalen Umfangsrichtung (14), wobei Rotor (6) und Stator (2) elektromagnetisch zusammenwirken, wobei der Stator (2) eine Anzahl an versetzten radial ausgerichteten Zähnen für eine Wickelung aufweist, wobei die Zähne in horizontaler Umfangsrichtung (14) angeordnet sind, wobei die Zähne jeweils mit einer Zahnkappe (20) und einem Zahnpol (21) verbunden sind, wobei zumindest ein Zahn durch zwei in horizontaler Umfangsrichtung (14) beanstandete, in Zenitrichtung radial ausgerichtete Stege (22) ausgebildet ist, zum Aufnehmen eines erstarrbaren, insbesondere aushärtbaren Mediums zwischen den Stegen (22).

Weiterhin betrifft die Erfindung ein Verfahren zum Betrieb einer solchen elektrischen Maschine sowie ein Herstellverfahren.

## Beschreibung

Die Erfindung betrifft eine elektrische Maschine umfassend einen Rotor und einen Stator mit einer horizontalen Umfangsrichtung, wobei Rotor und Stator elektromagnetisch zusammenwirken, wobei der Stator eine Anzahl an versetzten radial ausgerichteten Zähnen für eine Wickelung aufweist, wobei die Zähne in horizontaler Umfangsrichtung angeordnet sind, wobei die Zähne jeweils mit einer Zahnkappe und einem Zahnpol verbunden sind. Ferner betrifft die Erfindung ein Verfahren zum Betrieb einer solchen elektrischen Maschine sowie ein Herstellverfahren einer solchen elektrischen Maschine.

Läufer von elektrischen Maschinen sind häufig mit Wicklungen an Zähnen ausgestattet, die an der Stirnseite eines Blechpakets in einem Zahn miteinander verschaltet sind. Je höher die Beanspruchung der elektrischen Maschine ist, desto mehr erwärmt sich der Zahn und auch die Wickelung um einen Zahn selber. Dies gilt insbesondere auch für elektrische Motoren mit hoher Drehzahl. Bei hoher Drehzahl werden häufig Läuferzahnkappen, insbesondere zur radialen Abstützung der fliehkraftbelasteten Zähne benötigt. Diese Zahnkappen bestehen in der Regel aus hochfestem Stahl und sind als geschlossene Strukturen ausgeführt. An der einen axialen Seite ist die Zahnkappe auf einen Ballen einer Welle aufgeschrumpft. Der Ballen besitzt, sofern der elektrische Motor für höhere Leistungen ausgelegt ist, häufig radial gerichtete Entlüftungsbohrungen. Die Zahnkappe hingegen ist aus Stabilitätsgründen geschlossen ausgebildet. Dies führt gerade im Kappenbereich an der Wicklung zu einer unzureichenden Abfuhr der dort entstehenden Verlustwärme. Es entstehen Zonen mit sehr hoher Wicklungstemperatur (so genannte "HotSpots").

Daher werden die Zähne vergossen bzw. getränkt, u. a. um die Wärmeabfuhr aus dem Zahn zu verbessern. Durch Vergießen und Tränken der Zähne kann auch eine Fixierung der Wicklungen erfolgen. Damit wird neben der mechanischen Fixierung und Kompaktierung des Blechpakets eine elektrische Isolierung der Wicklungen untereinander erreicht. Die Vergussmasse bzw. das Tränkharz kann aber nicht vollständig den Zahn umfließen. Dadurch kann nicht die optimale Wärmeabfuhr und somit die optimale Performance des Motors erreicht werden.

Nach dem Tränken der Wicklung in den Nuten und des Zahnes bildet der Zahn eine massive harzgefüllte Einheit, durch die keine Kühlluft treten kann. In derartigen Zähnen treten daher regelmäßige Wärmequellen auf, die die thermische Ausnutzung der dynamoelektrischen Maschine begrenzen.

Eine hohe Wicklungstemperatur setzt daher die Lebensdauer der Wicklungsisolierung deutlich herab. Als Gegenmaßnahme wird daher meist die Leistung der Maschine begrenzt oder die Maschine wird thermisch überdimensioniert ausgelegt.

Es ist daher eine erste Aufgabe der Erfindung eine elektrische Maschine umfassend einen Stator mit einer Wicklung anzugeben, welche eine verbesserte Performance erzielt. Eine zweite und eine dritte Aufgabe liegen in der Angabe eines Verfahrens für den Betrieb einer elektrischen Maschine sowie in einem Herstellungsverfahren hierzu.

Die auf die Vorrichtung bezogene Aufgabe wird gelöst durch eine elektrische Maschine umfassend einen Rotor und einen Stator mit einer horizontalen Umfangsrichtung, wobei Rotor und Stator elektromagnetisch zusammenwirken, wobei der Stator eine Anzahl an versetzten radial ausgerichteten Zähnen für eine Wickelung aufweist, wobei die Zähne in horizontaler Umfangsrichtung angeordnet sind und wobei die Zähne jeweils mit einer Zahnkappe und einem Zahnpol verbunden sind und wobei zumindest ein Zahn durch zwei in horizontaler Umfangsrichtung beanstandete in Zenitrichtung radial ausgerichtete Stege ausgebildet ist, zum Aufnehmen eines erstarrbaren, insbesondere aushärtbaren Mediums zwischen den Stegen.

Die auf das Verfahren bezogene Aufgabe wird gelöst durch die Angabe eines Verfahrens zum Betrieb einer elektrischen Maschine umfassend einen Rotor und einen Stator mit einer horizontalen Umfangsrichtung, wobei Rotor und Stator elektromagnetisch zusammenwirken, wobei der Stator eine Anzahl an versetzten radial ausgerichteten Zähnen aufweist, wobei die Zähne in horizontaler Umfangsrichtung angeordnet werden und wobei die Zähne jeweils mit einer Zahnkappe und einem Zahnpol verbunden sind und wobei die Zähne mit zumindest einem elektrischen Leiter umwickelt werden, um eine Spule zu bilden, wobei zumindest ein Zahn durch zwei in horizontaler Umfangsrichtung beanstandete in Zenitrichtung radial ausgerichtete Stege ausgebildet wird und der Zahnpol eine Aussparung aufweist und die Zahnkappe eine Ausnehmung aufweist, wobei durch die Stege, die Aussparung und die Ausnehmung eine durchgängige Verbindung gebildet wird, zum Aufnehmen eines Mediums zumindest zwischen den Stegen, sodass durch das aufgenommene Medium im Betrieb ein thermischer Abtransport der Wärme zumindest von einer Innenseite des Leiters als auch von der Zahnkappe bewirkt wird.

Die auf das Herstellverfahren gerichtete Aufgabe wird gelöst durch die Angabe eines Herstellverfahrens einer elektrischen Maschine umfassend einen Rotor und einen Stator mit einer horizontalen Umfangsrichtung, wobei Rotor und Stator elektromagnetisch zusammenwirken und wobei der Stator eine Anzahl an versetzten radial ausgerichteten Zähnen aufweist, wobei die Zähne in horizontaler Umfangsrichtung angeordnet werden und wobei die Zähne jeweils mit einer Zahnkappe und einem Zahnpol verbunden sind und wobei die Zähne mit zumindest einem elektrischen Leiter umwickelt sind, um eine Spule zu bilden, wobei zumindest ein Zahn durch zwei in horizontaler Umfangsrichtung beanstandete in Zenitrichtung radial ausgerichtete Stege ausgebildet wird und der Zahnpol eine Aussparung aufweist und die Zahnkappe eine Ausnehmung aufweist, wobei durch die Stege, die Aussparung und die Ausnehmung eine durchgängige Verbindung gebildet wird, und wobei durch diese Verbindung zumindest zwischen den Stegen ein Medium, insbesondere fluides Medium aufgenommen wird, welches anschließend erstarrt, insbesondere aushärtet, sodass durch das aufgenommene Medium im Betrieb ein thermischer Abtransport der Wärme zumindest von einer Innenseite des Leiters als auch von der Zahnkappe bewirkt wird.

Die Zähne, um die die Drähte in der Maschine, bzw. im Motor gewickelt werden, sind quasi "hohl" ausgeführt, um dem Medium zu ermöglichen an bzw. in den hinteren Bereich der Drähte zu fließen. Damit wird der Draht optimal an das Medium angebunden und kann besser entwärmt werden als es die Zähne und die Zahnkappe alleine könnten. Die Performance des Motors steigt dadurch und somit die Leistung, die dieser im ganzen Drehzahlbereich, einschließlich im Nennpunkt abgeben kann. Dadurch lässt sich die Wickelung effizienter kühlen, was wiederum einer Steigerung der Leistung der elektrischen Maschine dienlich ist. Da die Wärme in und von der Zahnkappe besser abgeführt werden kann, ist eine Steigerung der Motorperformance im ganzen Drehzahlbereich, einschließlich im Nennpunkt möglich. Bei gleicher Leistungsanforderung an den Motor kann dieser kürzer ausgeführt werden.

Die Vergußmasse hat zusätzlichen Kontakt mit der Stirnfläche der Stege. Dadurch wird die Entwärmung des Motors ebenfalls gesteigert.

In den Unteransprüchen sind weitere vorteilhafte Maßnahmen aufgelistet, die beliebig miteinander kombiniert werden können, um weitere Vorteile zu erzielen.

Bevorzugt ist das Medium zumindest mit der Zahnkappe und zumindest mit dem Zahnpol thermisch zum Abtransport der Wärme verbunden.

In einem weiteren Ausführungsbeispiel weist die Zahnkappe eine Ausnehmung auf, sodass zwischen den Stegen und der Ausnehmung eine durchgängige Verbindung zur Aufnahme des Mediums entsteht. Bevorzugt weisen die Stege ein Stegende auf. Die Stegenden sind in horizontaler Umfangsrichtung durch einen Endabstand beabstandet und weisen eine sich quer zur horizontalen Umfangsrichtung erstreckende Endtiefe auf. Die Ausnehmung weist zumindest den Endabstand und/oder die Endtiefe auf. Dadurch ergibt sich ein einfaches Einbringen des Mediums zwischen den Stegen.

In einer weiteren bevorzugten Ausgestaltung sind die Stege mit einem elektrischen Leiter zum Ausbilden einer Spule umwickelt, wobei zwischen den Stegen und der Ausnehmung eine durchgängige Verbindung entsteht, sodass das Medium zumindest teilweise, insbesondere aber vollständig, in die Ausnehmung als auch zwischen den Stegen einbringbar ist und so durch das aufgenommene Medium im Betrieb zumindest ein thermischer Abtransport der Wärme von einer Innenseite des Leiters als auch von der Zahnkappe bewirkt ist. Dadurch ergibt sich ein erhöhtes Einbringvolumen vom Medium; es kann daher mehr Wärme über das erhöhte Mediumvolumen abgeführt werden.

In einer bevorzugten Ausgestaltung weist der Zahnpol eine Aussparung auf, so dass zwischen den Stegen und der Aussparung eine durchgängige Verbindung zur Aufnahme des Mediums entsteht. Auch hier können die Stege einen Steganfang aufweisen, wobei die Steganfänge in horizontaler Umfangsrichtung durch einen Anfangsabstand beabstandet sind und eine sich quer zur horizontalen Umfangsrichtung erstreckende Anfangstiefe aufweisen und wobei die Aussparung zumindest den Anfangsabstand und/oder die Anfangstiefe aufweist. Dadurch ergibt sich ein einfaches Einbringen des Mediums zwischen den Stegen.

In einem weiteren bevorzugten Beispiel sind die Stege mit einem elektrischen Leiter zum Ausbilden einer Spule umwickelt Zwischen den Stegen und der Ausnehmung eine ist durchgängige Verbindung, sodass das Medium zumindest teilweise, insbesondere aber vollständig, in die Ausnehmung als auch zwischen den Stegen einbringbar ist und so durch das aufgenommene Medium im Betrieb zumindest ein thermischer Abtransport der Wärme von einer Innenseite des Leiters als auch von dem Zahnpol bewirkt ist. Dadurch ergibt sich ein erhöhtes Einbringvolumen des Mediums; es kann daher mehr Wärme über das erhöhte Mediumvolumen abgeführt werden.

Bevorzugt ist das Medium ein erstarrbares, insbesondere aushärtbares Fluid. Auch kann das Medium ein erstarrbarer, insbesondere aushärtbarer Kunststoff sein. Insbesondere bei größeren Stückzahlen bringt dies einen Kostenvorteil. In einer weiteren Ausgestaltung sind die in Zenitrichtung radial ausgerichteten Stege gleichlang.

In einer bevorzugten Ausgestaltung sind die in Zenitrichtung radial ausgerichteten Stege parallelflankig oder trapezförmig angeordnet. Dies kann je nach Wickelung variiert werden.

Bevorzugt ist die elektrische Maschine als permanentmagneterregter Synchronmotor ausgebildet.

In einer bevorzugten Ausgestaltung weist die Zahnkappe eine von der Stegseite abgewandte Oberseite auf, wobei die Oberseite eine Vertiefung aufweist, insbesondere eine Vertiefung zum Aufnehmen des Mediums. Dadurch wird der Wärmeabtransport, insbesondere in der Zahnkappe, nochmehr gesteigert.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: im Längsschnitt die prinzipiellen Aktivteile einer dynamoelektrischen Maschine gemäß dem Stand der Technik,
- FIG 2: einen Querschnitt eines Blechpakets eines Stators ohne Wicklungssystem gemäß dem Stand der Technik,
- FIG 3: eine seitliche Ansicht eines Beispiels der erfindungsgemäßen Stege,
- FIG 4: die erfindungsgemäßen Stege mit der Fließrichtung des Mediums,
- FIG 5: ein weiteres Ausführungsbeispiel der Erfindung,
- FIG 6: die Erfindung im eingebauten, nicht bewickelten Zustand.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

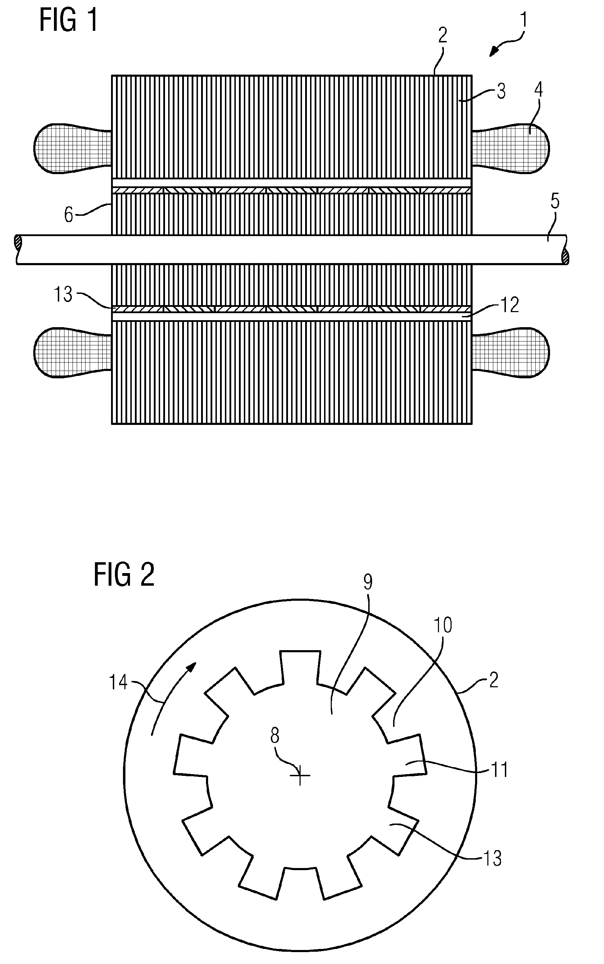

FIG 1 zeigt eine elektrische, hier dynamoelektrische, rotatorische Maschine 1, die einen Stator 2 aufweist, der mit Statorblechen 3 axial geschichtet ist. Über einen Luftspalt 12 wechselwirkt das Wicklungssystem des Stators 2 mit einem Rotor 6 und führt so zur Drehung dieser Maschine.

Der Rotor 6 weist in dem vorliegenden Fall, in dem es sich um eine permanentmagneterregte Synchronmaschine handelt, Oberflächenmagnete 13 auf. Der erfindungsgemäße Gedanke kann selbstverständlich auch bei Rotoren 6 mit vergrabenen Magneten umgesetzt werden.

Eine derartige dynamoelektrische rotatorische Maschine 1 ist ebenso als Generator einsetzbar.

Ebenso kann der erfinderische Gedanke auch für Außenläufermaschinen verwendet werden.

FIG 2 zeigt im Querschnitt ein Statorblechpaket 3 (FIG 1) mit einer Achse 8 in der Statorbohrung 9 um die sich letztlich eine Welle 5 (FIG 1), die drehfest mit einem Rotor 6 (FIG 1) verbunden ist, dreht. Zur Statorbohrung 9 hin weisen horizontaler Umfangsrichtung 14 in Zenitrichtung radial ausgerichtete Zähne nach dem Stand der Technik 10 hin, die durch Nuten 11 voneinander beabstandet sind. Die Zähne begrenzen die Ausnutzung der dynamoelektrischen Maschine 1, da in dem harzgetränkten Wicklungssystem, insbesondere in den Zähnen lokale Bereiche mit Übertemperatur - sogenannte HotSpots - auftreten, die im Betrieb der elektrischen Maschine 1 die thermische Ausnutzung der Maschine nach oben begrenzen.

Um die Isolation des Wicklungssystems einer dynamoelektrischen Maschine zu schützen, werden dynamoelektrische Maschinen gekühlt. Durch diese Kühlung wird die in der elektrischen Maschine entstehende Verlustwärme abgeführt. Je wirkungsvoller sich die Wärmeabfuhr aus der dynamoelektrischen Maschine gestaltet, desto kleiner kann die elektrische Maschine bei gleicher Leistungsabgabe gebaut werden. Motoren werden vergossen bzw. getränkt, u. a. um die Wärmeabfuhr aus dem Wickelkopf zu verbessern. Die Vergussmasse bzw. das Tränkharz, oder der Kunststoff im weiteren Medium genannt, kann aber nicht vollständig die Zahnkappe 20 umfließen. Dadurch kann nicht die optimale Wärmeabfuhr und somit nicht die optimale Performance des Motors erreicht werden.

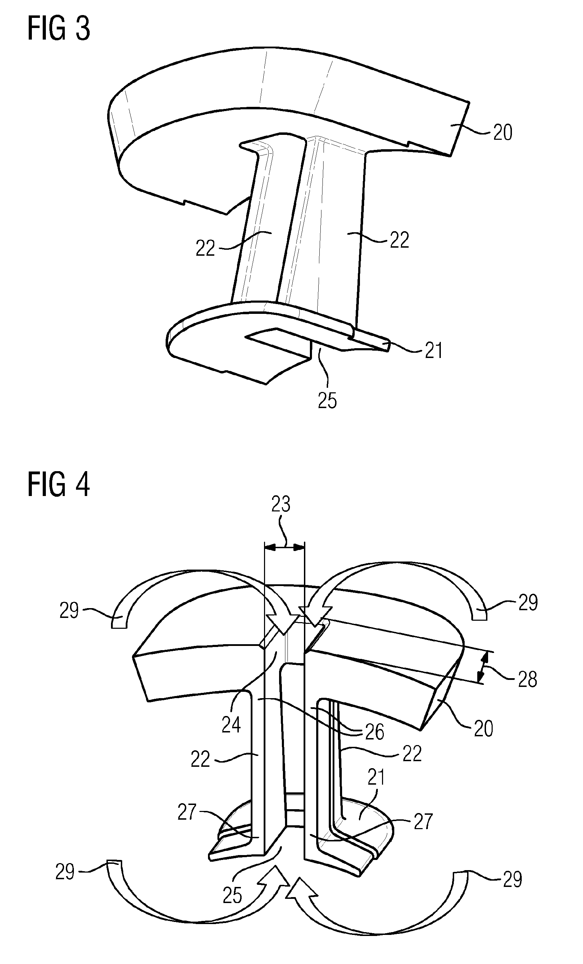

Erfindungsgemäß wird - wie in FIG 3 gezeigt - zumindest ein Zahn durch zwei in horizontaler Umfangsrichtung 14 (FIG 2) durch den Abstand 23 (FIG 4) beabstandete in Zenitrichtung radial ausgerichtete Stege 22 ausgebildet, zum Aufnehmen eines erstarrbaren, insbesondere aushärtbaren Mediums zwischen den Stegen 22. D.h. der Zahn besteht aus zwei Stegen 22, die die notwendige Luftstecke herstellen. Der Zahn ist jeweils mit einer Zahnkappe 20 und einem Zahnpol 21 verbunden.

FIG 4 zeigt die Zahnkappe 20 von hinten. Der Rest wird hohl ausgeführt. Ebenfalls weisen die Zahnkappe 20 eine Ausnehmung 24 und der Zahnpol 21 eine Aussparung 25 auf. Auch weisen die Stege 22 ein Stegende 26 und einen Steganfang 27 auf, wobei die Stegenden 26 als auch die Steganfänge 27 hier ebenfalls durch den Abstand 23 beabstandet sind. Auch haben Stegenden 26 und Steganfänge 27 eine Tiefe 28. Die Ausnehmung 24, der Zwischenraum zwischen den Stegen 22 und die Aussparung 25 sind nun eine durchgängige, gleichgroße Verbindung, welche das Medium aufnimmt mit der Fließrichtung 29 des Mediums, d.h. der Vergussmasse bzw. das Tränkharz bzw. den Kunststoff. Durch die Ausnehmung 24 als auch die Aussparung 25 kann dieses von zwei Richtungen in den Zwischenraum zwischen den Stegen 22 eingebracht werden. Durch das eingebrachte Medium wird der Wärmeabtransport aus dem Leiter, der Zahnkappe 20 und dem Zahnpol 21 verbessert.

Die Zähne, um die die Drähte im Motor gewickelt werden, sind "hohl" ausgeführt, um dem Medium zu ermöglichen, an den hinteren Bereich der Drähte zu fließen. Damit wird der Draht optimal an das Medium angebunden und kann besser entwärmt werden als es die Zahnkappe 20 /Zähne (FIG 2) alleine könnte / könnten. Dadurch wird die Wärmeabfuhr aus den HotSpots der Zahnkappe 20 erheblich verbessert. Daraus resultiert eine Steigerung der Motorperformance im ganzen Drehzahlbereich, einschließlich im Nennpunkt, da die Wärme in der Zahnkappe 20 /Leiter besser abgeführt werden kann. Bei gleicher Leistungsanforderung an den Motor kann dieser kürzer ausgeführt werden.

Die Vergussmasse bzw. das Tränkharz bzw. der Kunststoff hat zusätzlichen Kontakt mit der Stirnfläche des Statorblechpaket 3 (FIG 1). Dadurch wird die Entwärmung des Motors ebenfalls gesteigert. Die Performance des Motors steigt dadurch und somit die Leistung die dieser im ganzen Drehzahlbereich, einschließlich im Nennpunkt abgeben kann. Die Erfindung ermöglicht eine homogene und vollständige Ausfüllung der Statorwicklung.

Durch die Erfindung wird es somit ermöglicht, einen Stator 2 (FIG 1) voll zu vergießen bzw. zu tränken, ohne dass eine nachträgliche Bohrung angebracht werden muss. Daneben ergibt sich der Vorteil, dass die Vergussmasse bzw. das Tränkharz bzw. der Kunststoff die Statorwicklung und Hohlräume zuverlässig ausfüllt und eine glatte dem Rotor zugewandte Oberfläche ausbildet. Dies hat den Vorteil, dass keine Geometriesprünge vorhanden sind, an denen die mechanischen Spannungen bei hohen Drehzahlen unter Umständen zu hoch werden.

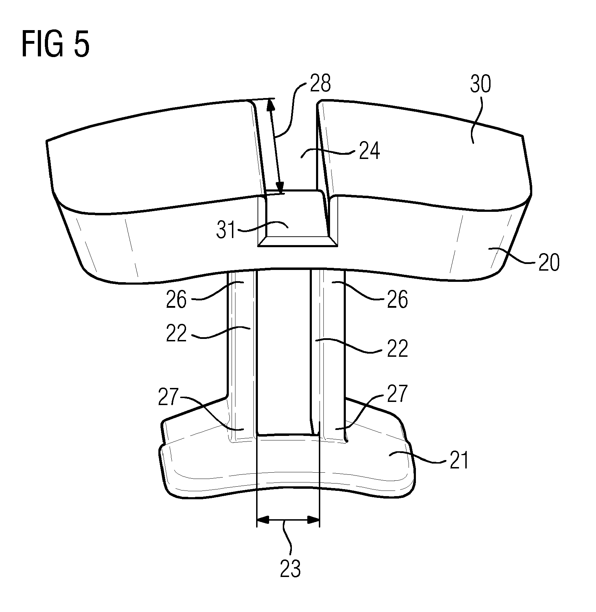

FIG 5 zeigt ein weiteres Ausführungsbeispiel der Erfindung. Die Oberseite 30 weist eine Vertiefung 31 auf, insbesondere eine Vertiefung zum Aufnehmen des Mediums. Die Zahnkappe 20 hat quasi einen zusätzlichen Flusskanal für das Medium auf der Oberseite 30 der Zahnkappe 20. Auch hier kann nun das Medium eingebracht werden und an den HotSpot-Stellen für erhöhten Wärmeabtransport sorgen.

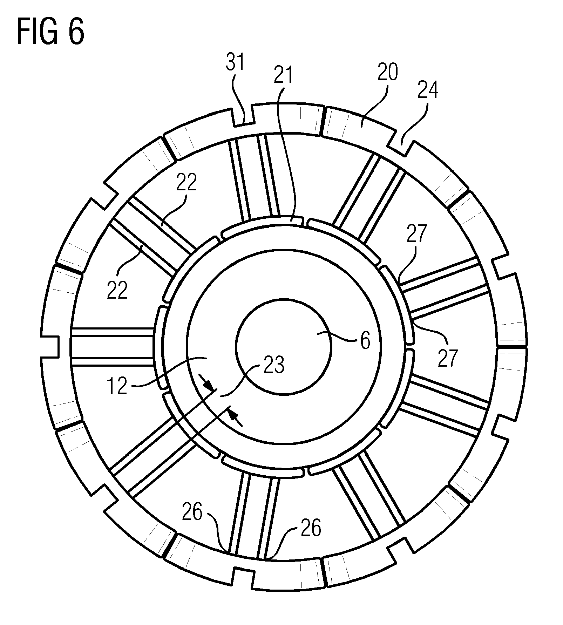

FIG 6 zeigt die Erfindung im eingebauten nicht bewickelten Zustand. Wie man erkennt, sind auf der Stirnseite die Stege 22 sichtbar und daher für das Medium in diesem Bereich zugänglich. Die Vergussmasse hat daher zusätzlichen Kontakt mit der Stirnfläche des "Blechpaketes", hier den Stegen 22. Dadurch wird die Entwärmung des Motors ebenfalls gesteigert.

## Patentansprüche

1. Elektrische Maschine (1) umfassend einen Rotor (6) und einen Stator (2) mit einer horizontalen Umfangsrichtung (14), wobei Rotor (6) und Stator (2) elektromagnetisch zusammenwirken, wobei der Stator (2) eine Anzahl an versetzten radial ausgerichteten Zähnen für eine Wickelung aufweist, wobei die Zähne in horizontaler Umfangsrichtung (14) angeordnet sind, wobei die Zähne jeweils mit einer Zahnkappe (20) und einem Zahnpol (21) verbunden sind,
**dadurch gekennzeichnet, dass** zumindest ein Zahn durch zwei in horizontaler Umfangsrichtung (14) beanstandete, in Zenitrichtung radial ausgerichtete Stege (22) ausgebildet ist, zum Aufnehmen eines erstarrbaren, insbesondere aushärtbaren Mediums zwischen den Stegen (22).

2. Elektrische Maschine (1) umfassend einen Rotor (6) und einen Stator (2) nach Anspruch 1,
**dadurch gekennzeichnet, dass** das Medium zumindest mit der Zahnkappe (20) und zumindest mit dem Zahnpol (21) thermisch verbunden ist.

3. Elektrische Maschine (1) umfassend einen Rotor (6) und einen Stator (2) nach einem der vorhergehenden Ansprüche, **dadurch gekennzeichnet, dass** die Zahnkappe (20) eine Ausnehmung (24) aufweist, so dass zwischen den Stegen (22) und der Ausnehmung (24) eine durchgängige Verbindung zur Aufnahme des Mediums ist.

4. Elektrische Maschine (1) umfassend einem Rotor (6) und einem Stator (2) nach Anspruch 3,
**dadurch gekennzeichnet, dass** die Stege (22) ein Stegende (26) aufweisen und die Stegenden (26) in horizontaler Umfangsrichtung (14) durch einen Endabstand beabstandet sind und eine sich quer zur horizontalen Umfangsrichtung (14) erstreckende Endtiefe aufweisen und wobei die Ausnehmung (24) zumindest den Endabstand und/oder die Endtiefe aufweist.

5. Elektrische Maschine (1) umfassend einem Rotor (6) und einem Stator (2) nach Anspruch 3 oder 4,
**dadurch gekennzeichnet, dass** die Stege (22) mit einem elektrischen Leiter zum Ausbilden einer Spule umwickelt sind und zwischen den Stegen (22) und der Ausnehmung eine durchgängige Verbindung entsteht, sodass das Medium zumindest teilweise, insbesondere aber vollständig in die Ausnehmung (24) als auch zwischen den Stegen (22) einbringbar ist und so durch das aufgenommene Medium im Betrieb zumindest ein thermischer Abtransport der Wärme von einer Innenseite des Leiters als auch von der Zahnkappe (20) bewirkt ist.

6. Elektrische Maschine (1) umfassend einen Rotor (6) und einen Stator (2) nach einem der vorhergehenden Ansprüche, **dadurch gekennzeichnet, dass** der Zahnpol (21) eine Aussparung (25) aufweist, so dass zwischen den Stegen (22) und der Aussparung (25) eine durchgängige Verbindung zur Aufnahme des Mediums ist.

7. Elektrische Maschine (1) umfassend einen Rotor (6) und einen Stator (2) nach Anspruch 6,
**dadurch gekennzeichnet, dass** die Stege (22) einen Steganfang (27) aufweisen und die Steganfänge (27) in horizontaler Umfangsrichtung (14) durch eine Anfangsabstand beabstandet sind und eine sich quer zur horizontalen Umfangsrichtung (14) erstreckende Anfangstiefe aufweisen und wobei die Aussparung (25) zumindest den Anfangsabstand und/oder die Anfangstiefe aufweist.

8. Elektrische Maschine (1) umfassend einen Rotor (6) und einen Stator (2) nach Anspruch 6 oder 7,
**dadurch gekennzeichnet, dass** die Stege (22) mit einem elektrischen Leiter zum Ausbilden einer Spule umwickelt sind und zwischen den Stegen (22) und der Aussparung (25) eine durchgängige Verbindung entsteht, sodass das Medium zumindest teilweise, insbesondere aber vollständig, in die Aussparung (25) als auch zwischen den Stegen (22) einbringbar ist und so durch das aufgenommene Medium im Betrieb zumindest ein thermischer Abtransport der Wärme von einer Innenseite des Leiters als auch von dem Zahnpol bewirkt ist.

9. Elektrische Maschine (1) umfassend einen Rotor (6) und einen Stator (2) nach einem der vorhergehenden Ansprüche, **dadurch gekennzeichnet, dass** das Medium ein erstarrbares, insbesondere aushärtbares Fluid ist.

10. Elektrische Maschine (1) umfassend einen Rotor (6) und einen Stator (2) nach Anspruch 9,
**dadurch gekennzeichnet, dass** das Medium ein erstarrbarer, insbesondere aushärtbarer Kunststoff ist.

11. Elektrische Maschine (1) umfassend einen Rotor (6) und einen Stator (2) nach einem der vorhergehenden Ansprüche, **dadurch gekennzeichnet, dass** die in Zenitrichtung radial ausgerichteten Stege (22) gleichlang sind.

12. Elektrische Maschine (1) umfassend einen Rotor (6) und einen Stator (2) nach einem der vorhergehenden Ansprüche, **dadurch gekennzeichnet, dass** die in Zenitrichtung radial ausgerichteten Stege (22) parallelflankig oder trapezförmig angeordnet sind.

13. Elektrische Maschine (1) umfassend einen Rotor (6) und einen Stator (2) nach einem der vorhergehenden Ansprüche, **dadurch gekennzeichnet, dass** die elektrische Maschine (1) als permanentmagneterregter Synchronmotor ausgebildet ist.

14. Elektrische Maschine (1) umfassend einen Rotor (6) und einen Stator (2) nach einem der vorhergehenden Ansprüche, **dadurch gekennzeichnet, dass** die Zahnkappe (20) eine von der Stegseite abgewandte Oberseite (30) aufweist, und die Oberseite (30) eine Vertiefung (31) aufweist, insbesondere eine Vertiefung (31) zum Aufnehmen des Mediums.

15. Verfahren zum Betrieb einer elektrischen Maschine (1) umfassend einen Rotor (6) und einen Stator (2) mit einer horizontalen Umfangsrichtung (14), wobei Rotor (6) und Stator (2) elektromagnetisch zusammenwirken, wobei der Stator (2) eine Anzahl an versetzten radial ausgerichteten Zähnen aufweist, wobei die Zähne in horizontaler Umfangsrichtung (14) angeordnet werden und wobei die Zähne jeweils mit einer Zahnkappe (20) und einem Zahnpol (21) verbunden sind, und wobei die Zähne mit zumindest einem elektrischen Leiter umwickelt werden, um eine Spule zu bilden,
**dadurch gekennzeichnet, dass** zumindest ein Zahn durch zwei in horizontaler Umfangsrichtung (14) beanstandete in Zenitrichtung radial ausgerichtete Stege (22) ausgebildet wird und die Zahnkappe (20) eine Ausnehmung (24) aufweist, wobei durch die Stege (22) und die Ausnehmung (24) eine durchgängige Verbindung gebildet wird, zum Aufnehmen eines Mediums zumindest zwischen den Stegen (22), so dass durch das aufgenommene Medium im Betrieb ein thermischer Abtransport der Wärme zumindest von einer Innenseite des Leiters als auch von der Zahnkappe (20) bewirkt wird.

16. Verfahren zum Betrieb einer elektrischen Maschine (1) umfassend einen Rotor (6) und einen Stator (2), nach Anspruch 15, **dadurch gekennzeichnet, dass** die Zahnkappe (20) eine Ausnehmung (24) aufweist und der Zahnpol (21) eine Aussparung (25), wobei durch die Stege (22), die Aussparung (25) und die Ausnehmung (24) eine durchgängige Verbindung gebildet wird, zum Aufnehmen eines Mediums zumindest zwischen den Stegen (22).

17. Verfahren zum Betrieb einer elektrischen Maschine (1) umfassend einen Rotor (6) und einen Stator (2) nach Anspruch 15 oder 16,
**dadurch gekennzeichnet, dass** die Zahnkappe (20) eine von der Stegseite abgewandte Oberseite (30) aufweist, und in die Oberseite (30) eine Vertiefung (31) eingebracht wird, insbesondere zum Aufnehmen des Mediums.

18. Verfahren zum Betrieb einer elektrischen Maschine (1) umfassend einem Rotor (6) und einem Stator (2) nach Anspruch 15,16 oder 17,
**dadurch gekennzeichnet, dass** das Medium zumindest teilweise in der Aussparung (25) und/oder Ausnehmung (24) eingebracht wird.

19. Herstellverfahren einer elektrischen Maschine (1) umfassend einen Rotor (6) und einen Stator (2) mit einer horizontalen Umfangsrichtung (14), wobei Rotor (6) und Stator (2) elektromagnetisch zusammenwirken, wobei der Stator (2) eine Anzahl an versetzten radial ausgerichteten Zähnen aufweist, wobei die Zähne in horizontaler Umfangsrichtung (14) angeordnet werden und wobei die Zähne jeweils mit einer Zahnkappe (20) und einem Zahnpol (21) verbunden sind und wobei die Zähne mit zumindest einem elektrischen Leiter umwickelt sind, um eine Spule zu bilden,
**dadurch gekennzeichnet, dass** zumindest ein Zahn durch zwei in horizontaler Umfangsrichtung (14) beanstandete in Zenitrichtung radial ausgerichtete Stege ausgebildet wird und der Zahnpol (21) eine Aussparung (25) aufweist und die Zahnkappe (20) eine Ausnehmung (24) aufweist, wobei durch die Stege (22), die Aussparung (25) und die Ausnehmung (24) eine durchgängige Verbindung gebildet wird, wobei durch diese Verbindung zumindest zwischen den Stegen (22) ein Medium, insbesondere fluides Medium aufgenommen wird, welches anschließend erstarrt, insbesondere aushärtet, sodass durch das aufgenommene Medium im Betrieb ein thermischer Abtransport der Wärme zumindest von einer Innenseite des Leiters als auch von der Zahnkappe (20) bewirkt wird.
